# EUROPEAN PATENT APPLICATION

(11) **EP 4 750 002 A1**
(43) Date of publication of application: **27.05.2026**
(21) Application number: 24857628.2
(22) Date of filing: 09.02.2024
(51) Int. Cl.: H04L 12/40

(54) **DATA TRANSMISSION METHOD, CHIP, AND STORAGE MEDIUM**

(30) Priority: 25.08.2023 WO PCT/CN2023/115046; 26.12.2023 WO PCT/CN2023/142094
(71) Applicant: Shenzhen Goodix Technology Co., Ltd., Shenzhen, Guangdong 518045 (CN)
(72) Inventor: WANG, Jihui, Shenzhen, Guangdong 518045 (CN); YU, Xinhua, Shenzhen, Guangdong 518045 (CN); DAI, Xuewei, Shenzhen, Guangdong 518045 (CN); YANG, Chunmei, Shenzhen, Guangdong 518045 (CN); LI, Jian, Shenzhen, Guangdong 518045 (CN); YAN, Ke, Shenzhen, Guangdong 518045 (CN)
(74) Representative: Kraus & Lederer PartGmbB
(86) International application number: PCT/CN2024/077133
(87) International publication number: WO 2025/044072

(57) **Abstract**

Embodiments of the present disclosure relate to the technical field of electronic communication, and provide a method for data transmission, a chip, and a storage medium, wherein the method for data transmission is applied to a target node and comprises: obtaining a first data packet transmitted via a physical layer; and sending, based on a physical transmission medium used to connect a first interface of the target node to a second interface of a downstream node, the first data packet to a physical layer of the downstream node through a physical layer of the target node. With this solution, the first data packet is transmitted in the physical layer, to-be-transmitted data accounts for a large proportion in the first data packet, thereby improving the bandwidth utilization of the target node for data transmission. Moreover, the first data packet is directly transmitted to the downstream node through the physical layer of the target node, without the need for transmission through a switch and without the need for complex encapsulation through a MCU of the target node, thereby reducing the transmission latency in data transmission by the target node, and improving the transmission efficiency.

## Description

The present disclosure claims priority to a PCT patent application with a filing date of 25 August 2023, an application number of "PCT/CN2023/115046" and a patent title of "DATA FORWARDING METHOD, CHIP, AND ELECTRONIC DEVICE" and claims priority to a PCT patent application with a filing date of 26 December 2023, an application number of "PCT/CN2023/142094" and a patent title of "METHOD FOR TRANSMITTING NETWORK DATA, CHIP, AND COMMUNICATION SYSTEM," the entire contents of which are incorporated herein by reference.

### TECHNICAL FIELD

Embodiments of the present disclosure relate to the technical field of electronic communication, and particularly relate to a method for data transmission, a chip, and a storage medium.

### BACKGROUND

As a vehicle becomes increasingly intelligent, the number of electronic control units (ECUs) within the vehicle is growing, and data transmission within the vehicle is implemented through these units.

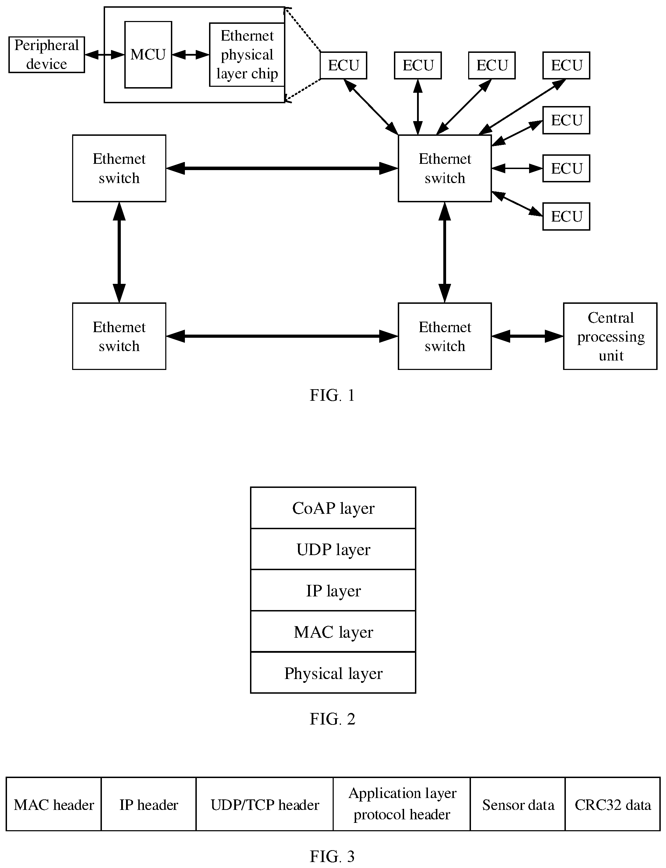

At present, as shown in FIG. 1, an ECU usually comprises a sensor, a microcontroller unit (MCU), and an Ethernet physical layer (PHY) chip. Based on the above, a specific process of data transmission by the ECU may be as follows: after the MCU obtains to-be-transmitted sensor data from a sensor, the MCU can encapsulate the sensor data to obtain an encapsulated data packet. Then, the Ethernet physical layer chip sends the encapsulated data packet to an Ethernet switch connected to the ECU. The Ethernet switch forwards the encapsulated data packet to a central processing unit, so that the central processing unit can parse the encapsulated data packet to obtain the sensor data.

However, data transmitted over a standard Ethernet is generally processed across multiple protocol layers. For example, referring to FIG. 2, an application layer protocol is, as an example, a Constrained Application Protocol (CoAP), and data from an external device needs to be processed through a physical layer, a Media Access Control Address (MAC) layer, an Internet Protocol (IP) layer, a User Datagram Protocol (UDP) layer, and a CoAP layer in a standard network model before being sent to a switch to enable data transmission between the ECU and the switch. Therefore, after the above sensor data is encapsulated by the MCU, the encapsulated data packet includes not only the sensor data, but also protocol headers corresponding to each of the above layers. For example, referring to FIG. 3, the encapsulated data packet may include, e.g., a MAC header, an IP header, a UDP/Transmission Control Protocol (TCP) header, an application layer protocol header, sensor data, or Cyclic Redundancy Check 32 (CRC32) data. Therefore, in order to transmit the above sensor data, the ECU needs to transmit the encapsulated data packet comprising the sensor data and a significant size of other data, so that the sensor data accounts for a small proportion in the encapsulated data packet, and so that the ECU suffers from a low bandwidth utilization for data transmission. In addition, during data transmission by the ECU, latency is generated in each of processes of, e.g., obtaining to-be-transmitted data by the MCU from the sensor, encapsulating the sensor data by the MCU, transmitting the encapsulated data packet in the switch, and parsing the encapsulated data packet by the central processing unit. Therefore, the ECU experiences significant transmission latency in data transmission.

### SUMMARY

In view of the above, embodiments of the present disclosure provide a method for data transmission, a chip, and a storage medium, to at least partially address the above problems.

According to an embodiment in a first aspect of the present disclosure, a method for data transmission is provided, wherein the method is applied to a target node, and includes: obtaining a first data packet transmitted via a physical layer; and sending, by a physical layer of the target node, the first data packet to a physical layer of the downstream node based on a physical transmission medium used for connecting a first interface of the target node and a second interface of a downstream node.

In a possible implementation, the obtaining the first data packet transmitted via the physical layer includes: obtaining to-be-transmitted data, and encapsulating the to-be-transmitted data, to obtain the first data packet.

In a possible implementation, the obtaining the first data packet transmitted via the physical layer includes: receiving, by the physical layer of the target node, a second data packet transmitted via the physical layer from a physical layer of the upstream node based on a physical transmission medium used for connecting a third interface of the target node and a fourth interface of the upstream node.

In a possible implementation, the physical layer of the target node sends the first data packet to the physical layer of the downstream node via a real-time streaming manner.

In a possible implementation, the first data packet includes a plurality of data fields partitioned into a plurality of time slices in a time domain, so that a preceding data field among the plurality of data fields is processed and transmitted by the target node prior to subsequent data fields.

In a possible implementation, the obtaining the first data packet based on the second data packet includes: obtaining the first data packet by processing the second data packet in at least one of ways below: i. reading, if the second data packet includes target data, the target data from the second data packet, wherein the target data includes data whose destination node is the target node or common data of a transmission system where the target node is located; ii. writing, if the to-be-transmitted data is obtained, at least a portion of the to-be-transmitted data into the second data packet; or iii. determining, if the second data packet does not include the data destined for the target node and the target node does not obtain the to-be-transmitted data, the second data packet as the first data packet.

In a possible implementation, the first data packet is obtained by processing the second data packet via the target node via a real-time streaming manner.

In a possible implementation, the second data packet includes at least one data field, and a data field marked as being in an idle state in the second data packet is an idle field; the reading, if the second data packet includes the target data, the target data from the second data packet includes: obtaining, if the second data packet includes a first data field for loading the target data, the target data loaded in the first data field, and determining the first data field where the target data is located as an idle field; and the writing, if obtaining the to-be-transmitted data, at least the portion of the to-be-transmitted data into the second data packet includes: loading, if the to-be-transmitted data is obtained, at least the portion of the to-be-transmitted data into the idle field or the second data field in the second data packet, wherein the second data field is a data field with data loaded therein having a lower priority than the to-be-transmitted data.

In a possible implementation, the writing, if the to-be-transmitted data is obtained, at least the portion of the to-be-transmitted data into the idle field or the second data field in the second data packet includes: sequentially loading, if a plurality of the to-be-transmitted data are obtained, at least a portion of each of the to-be-transmitted data into the idle field or the second data field in descending order of priority of the plurality of the to-be-transmitted data.

In a possible implementation, the method further includes: processing, if the second data packet includes a plurality of the first data fields and after obtaining the target data loaded in the plurality of the first data fields, the target data loaded in the first data fields in descending order of priority of the target data loaded in the plurality of the first data fields.

In a possible implementation, the method further includes: elevating, if a retention duration of the to-be-transmitted data at the target node is longer than a preset duration threshold and a priority of the to-be-transmitted data being lower than a second highest priority, the priority of the to-be-transmitted data.

In a possible implementation, the sequentially loading at least the portion of each of the to-be-transmitted data into the idle field or the second data field includes: splitting, for each of the to-be-transmitted data, if a data size of the to-be-transmitted data is greater than a capacity of the data field, the to-be-transmitted data into at least two sub-data, loading the at least two sub-data into the idle field or the second data field respectively, and loading, if the data size of the to-be-transmitted data is less than or equal to the capacity of the data field, the to-be-transmitted data into the idle field or the second data field.

In a possible implementation, the to-be-transmitted data is data obtained by the physical layer of the target node from an external device connected to the target node or a local module in the target node.

In a possible implementation, the processing the target data loaded in the first data fields includes: reading from/writing into the external device connected to the target node or the local module in the target node based on the target data loaded in the first data fields.

In a possible implementation, the first data packet includes at least one data field, the data field includes a data sub-block and a sub-block header, the data sub-block is used to load main data (payload data), the sub-block header is used to load attribute information of the main data, and the attribute information of the main data includes data type information of the main data and a data length of the main data.

In a possible implementation, the attribute information of the main data further includes at least one or more of idle information of a data field where the main data is located, a data transmission direction of the target node, source node information of the main data, destination node information of the main data, priority information of the main data, and sequence number information of the main data.

In a possible implementation, the first data packet includes a common header, and the common header is loaded with a preamble for physical layer protocol identification corresponding to the first data packet.

In a possible implementation, the target node, the downstream node, and the upstream node are applied to a transmission system, the transmission system includes a master node and a plurality of child nodes, and the master node and the plurality of child nodes are sequentially connected to form a link; the link is a ring topology, or the link is a linear topology and a first child node and a second child node are located at both ends of the link respectively, or the link is a linear topology and the master node and a third child node are located at both ends of the link respectively; and the target node is any one of the child nodes, and the upstream node and the downstream node are two adjacent nodes to the target node in the link respectively.

According to an embodiment in a second aspect of the present disclosure, a chip is provided, comprising: a processor and a memory, wherein the processor and the memory communicate with each other; and the memory is configured to store at least one executable instruction, and the executable instruction enables the processor to implement operations corresponding to the above first aspect.

According to an embodiment in a third aspect of the present disclosure, a computer storage medium is provided, storing a computer program thereon, wherein the program, when executed by a processor, implements the method in the above first aspect.

According to the data transmission solutions provided in the embodiments of the present disclosure, a target node can obtain a first data packet transmitted via a physical layer, and transmit the first data packet to a physical layer of a downstream node through a physical layer of the target node. Therefore, the first data packet is transmitted via the physical layer. Compared with data packet encapsulation across multiple protocol layers through a MCU, the first data packet does not include a plurality of protocol headers, and to-be-transmitted data accounts for a large proportion in the first data packet, thereby improving the bandwidth utilization of the target node for data transmission; and the first data packet is directly transmitted to the downstream node through the physical layer of the target node, without the need for transmission through a switch, without the need for complex encapsulation through a MCU of the target node, and without the need for complex parsing at the downstream node, thereby reducing the transmission latency in data transmission by the target node, sending data from the target node to the downstream node in real time, and improving the transmission efficiency.

### BRIEF DESCRIPTION OF DRAWINGS

To more clearly describe technical solutions of embodiments of the present disclosure or the prior art, drawings required to be used in the description of the embodiments or the prior art will be briefly introduced below. Apparently, the drawings in the description below are merely some embodiments disclosed in the embodiments of the present disclosure. For those of ordinary skills in the art, other drawings may also be obtained based on these drawings.
FIG. 1 is a schematic diagram of a vehicle network system based on the background of the present disclosure;
FIG. 2 is a schematic diagram of each layer of a network model based on the background of the present disclosure;
FIG. 3 is a schematic diagram of encapsulated data based on the background of the present disclosure;
FIG. 4 is a flowchart of a method for data transmission according to an embodiment of the present disclosure;
FIG. 5 is a schematic diagram of a target node connection mode according to an embodiment of the present disclosure;
FIG. 6 is a schematic diagram of a first data packet according to an embodiment of the present disclosure;
FIG. 7 is a schematic diagram of a transmission system according to an embodiment of the present disclosure;
FIG. 8 is a schematic diagram of a transmission system according to another embodiment of the present disclosure;
FIG. 9 is a schematic diagram of a transmission system according to still another embodiment of the present disclosure; and
FIG. 10 is a schematic block diagram of a chip according to an embodiment of the present disclosure.

### DETAILED DESCRIPTION

To enable those skilled in the art to better understand technical solutions of embodiments of the present disclosure, the technical solutions of the embodiments of the present disclosure will be clearly and completely described below with reference to the drawings in the embodiments of the present disclosure. Apparently, the described embodiments are merely some, instead of all, of the embodiments of the present disclosure. All other embodiments obtained by those of ordinary skills in the art based on some embodiments among the embodiments of the present disclosure should be encompassed within the scope of protection of the embodiments of the present disclosure.

At present, as shown in FIG. 1, a simplified schematic diagram of an example vehicle network system in related art is shown. A specific process of data transmission by an ECU may be as follows: after a MCU in the ECU obtains to-be-transmitted sensor data from an external device such as a sensor, the MCU can encapsulate the sensor data, to obtain an encapsulated data packet, then an Ethernet physical layer chip in the ECU sends the encapsulated data packet to an Ethernet switch connected to the ECU, and the Ethernet switch forwards the encapsulated data packet to a central processing unit, so that the central processing unit can parse the encapsulated data packet to obtain the sensor data.

However, data transmitted over a standard Ethernet is generally processed across multiple protocol layers. For example, referring to FIG. 2, an application layer protocol is, as an example, a CoAP, and data from an external device needs to be processed through a physical layer, a MAC layer, an IP layer, a UDP layer, and a CoAP layer in a standard network model before being sent to a switch to enable data transmission between the ECU and the switch. Therefore, after the above sensor data is encapsulated by the MCU, the encapsulated data packet includes not only the sensor data, but also protocol headers corresponding to each of the above layers. For example, referring to FIG. 3, the encapsulated data packet may include, e.g., a MAC header, an IP header, a UDP/TCP header, an application layer protocol header, sensor data, or CRC32 data. Therefore, in order to transmit the above sensor data, the ECU needs to transmit the encapsulated data packet comprising the sensor data and a significant size of other data, so that the sensor data accounts for a small proportion in the encapsulated data packet, and so that the ECU suffers from a low bandwidth utilization for data transmission. In addition, during data transmission by the ECU, latency is generated in each of processes of, e.g., obtaining to-be-transmitted data by the MCU from the sensor, encapsulating the sensor data by the MCU, transmitting the encapsulated data packet in the switch, and parsing the encapsulated data packet by the central processing unit. Therefore, the ECU experiences significant transmission latency in data transmission. For example, a typical value of transmission latency includes: a latency in receiving peripheral device data, such as the sensor data, by the MCU (about 1 us), a latency in encapsulating the sensor data into a data packet (the example data packet here is a standard Ethernet data packet) by the MCU (about 10 us), and a latency in transmitting the data packet in two switches (about 500 us), as well as a latency in parsing the data packet and obtaining the sensor data by the central processing unit (about 5 us). Such a large transmission latency makes it increasingly difficult to satisfy the requirements for use of the present vehicle network system.

To address the above problems, an embodiment of the present disclosure provides a method for data transmission. It should be noted that the technical solutions in the embodiments of the present disclosure are not limited to application to a network system in a vehicle scenario, and may also be applied to other scenarios.

### Method for data transmission

The method for data transmission is detailed below with reference to a plurality of embodiments.

The method for data transmission is applied to a target node. For example, the method for data transmission may be applied to the target node, which performs data transmission using the method for data transmission and through a downstream node connected the target node.

In a possible implementation, the target node is, for example, a chip, and is used for physical layer-based transmission.

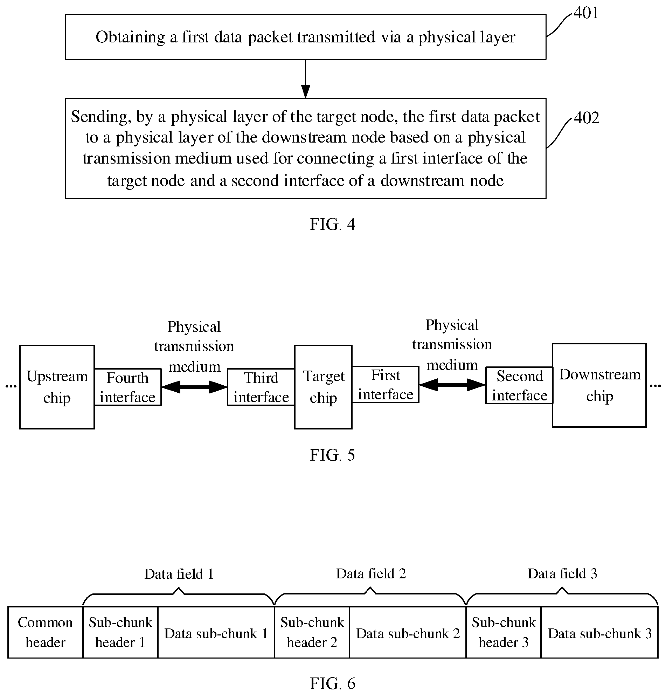

FIG. 4 is a flowchart of a method for data transmission according to an embodiment of the present disclosure. As shown in FIG. 4, the method for data transmission includes the following steps:
Step 401: obtaining a first data packet transmitted via a physical layer.

The physical layer is a bottom layer in network communication. The first data packet is generated by a target node or is obtained by processing a received data packet via the target node, which is not limited in the embodiments of the present disclosure. The first data packet is obtained by reading from/writing into a data packet encapsulated in the physical layer. If the first data packet is generated by the target node, the data packet encapsulated in the physical layer is encapsulated in a physical layer of the target node. If the first data packet is obtained by processing the received data packet via the target node, the data packet encapsulated in the physical layer is encapsulated in a physical layer of an additional node, and the additional node is a node used to generate the data packet encapsulated in the physical layer.

In a specific embodiment, the target node may obtain the first data packet through its physical layer.

Step 402: sending, by a physical layer of the target node, the first data packet to a physical layer of the downstream node based on a physical transmission medium used for connecting a first interface of the target node and a second interface of a downstream node.

In a specific embodiment, the physical layer of the target node can send the first data packet to the physical layer of the downstream node through the first interface, a physical transmission medium used to connect the first interface to the second interface, and the second interface, wherein the physical transmission medium is, for example, a coaxial cable or a twisted pair, and the twisted pair may be a shielded twisted pair or an unshielded twisted pair. For example, as shown in FIG. 5, the target node is a target chip for transmission based on the physical layer. The first interface is arranged on the target chip. The downstream node is a downstream chip for transmission based on the physical layer. The second interface is arranged on the downstream chip. Based on the above, the target chip sends the first data packet to the downstream chip through the first interface, the physical transmission medium used to connect the first interface to the second interface, and the second interface, so that the physical layer of the target node sends the first data packet to the physical layer of the downstream node. Both the first interface and the second interface are used to transmit physical layer data.

In an embodiment of the present disclosure, the target node can obtain the first data packet transmitted via the physical layer, and transmit the first data packet to the physical layer of the downstream node through the physical layer of the target node. Therefore, the first data packet is transmitted via the physical layer. Compared with data packet encapsulation across multiple protocol layers through a MCU, the first data packet does not include a plurality of protocol headers, and to-be-transmitted data accounts for a large proportion in the first data packet, thereby improving the bandwidth utilization of the target node for data transmission; and the first data packet is directly transmitted to the downstream node through the physical layer of the target node, without the need for transmission through a switch, without the need for complex encapsulation through a MCU of the target node, and without the need for complex parsing at the downstream node, thereby reducing the transmission latency in data transmission by the target node, sending data from the target node to the downstream node in real time, and improving the transmission efficiency.

If the first data packet being generated by the target node and the first data packet is obtained by processing the received data packet via the target node respectively, the above step 401 has at least two implementations below:
In a possible implementation, the above step 401 includes specific processing below: obtaining to-be-transmitted data, and encapsulating the to-be-transmitted data, to obtain the first data packet.

If the first data packet is generated by the target node, when the target node obtains the first data packet, the physical layer of the target node can obtain the to-be-transmitted data and encapsulates the to-be-transmitted data, to obtain the first data packet.

In an embodiment of the present disclosure, when generating the first data packet, the target node can directly encapsulate the to-be-transmitted data through its physical layer, without the need for complex encapsulation through the MCU of the target node, thereby making an encapsulation duration of the first data packet shorter, reducing the transmission latency in data transmission by the target node, and improving the transmission efficiency.

In another possible implementation, the above step 401 includes specific processing below:
receiving, by the physical layer of the target node, a second data packet transmitted via the physical layer from a physical layer of the upstream node based on a physical transmission medium used for connecting a third interface of the target node and a fourth interface of the upstream node; and
obtaining the first data packet based on the second data packet.

In a specific embodiment, the physical layer of the target node can receive the second data packet sent from the physical layer of the upstream node through the third interface, the physical transmission medium used for connecting the third interface with the fourth interface, and the fourth interface. For example, as shown in FIG. 5, the target node is a target chip for transmission based on the physical layer, the third interface is arranged on the target chip, the upstream node is an upstream chip for transmission based on the physical layer, and the fourth interface is arranged on the upstream chip. Based on the above, the target chip receives the second data packet from the upstream chip through the third interface, the physical transmission medium used to connect the third interface and the fourth interface, and the fourth interface, so that the physical layer of the target node receives the second data packet from the physical layer of the upstream node.

In an embodiment of the present disclosure, the physical layer of the target node receives the second data packet sent from the physical layer of the upstream node through the physical transmission medium, and obtains the first data packet based on the second data packet. Therefore, the data packet is directly transmitted between the upstream node and the target node by the physical layer, without the need for complex encapsulation through the MCU of the upstream node before being forwarded, and without the need for complex decapsulation through the target node, thereby making the transmission duration of the second data packet shorter, reducing the transmission latency in data transmission between the upstream node and the target node, and improving the transmission efficiency. It should be understood that in the process of obtaining the first data packet based on the second data packet, the first data packet can be obtained simply by an operation, such as reading from/writing into the second data packet, without the need for re-decapsulation and encapsulation of the data packet.

In a possible implementation, the physical layer of the target node sends the first data packet to the physical layer of the downstream node via a real-time streaming manner. The real-time streaming transmission and processing of the data packet means immediate real-time processing of the data packet upon its arrival at the destination node, rather than processing or transmission only until the entire data packet is completely received.

In an embodiment of the present disclosure, the target node implements data transmission and processing via the real-time streaming manner. Therefore, compared with switch-based transmission or other software-based or wireless transmission of a data packet in related art, whereby all data of the data packet needs to be completely received before transmission or processing, the first data packet sent from the target node can be processed almost in real time by the physical layer of the downstream node, that is, the downstream node immediately processes and transmits a portion of data in the first data packet upon obtainment, thereby further reducing the data transmission latency, and ensuring real-time transmission and processing of the data in the first data packet as far as possible.

In a possible implementation, the first data packet includes a plurality of data fields partitioned into a plurality of time slices in a time domain, so that a preceding data field among the plurality of data fields is processed and transmitted by the target node prior to subsequent data fields.

In the first data packet, time corresponding to a time slice of the preceding data field is prior to time corresponding to a time slice of a succeeding data field.

For example, FIG. 6 is a schematic diagram of a first data packet according to an embodiment of the present disclosure. As shown in FIG. 6, the first data packet includes data fields 1, 2, and 3. Time corresponding to a time slice of the data field 1 is prior to time corresponding to a time slice of the data field 2, and time corresponding to a time slice of the data field 3 is after time corresponding to the time slice of the data field 2. After receiving the first data packet, the target node can perform data processing, such as reading from/writing into the data fields 1, 2, and 3 sequentially, instead of performing data processing after completely receiving all data loaded in the data fields 1, 2, and 3, so that the data field with a higher precedence in the first data packet is processed and transmitted by the target node earlier.

In an embodiment of the present disclosure, with a solution that each data field in the first data packet has a corresponding time slice, the target node can, after receiving the first data packet, sequentially perform data processing such as reading from/writing into each data field in the first data packet in order from front to rear of the data fields in the first data packet, so that the data field with a higher precedence in the first data packet is processed and transmitted by the target node earlier, thereby immediately processing and transmitting a data field in the first data packet upon obtainment, reducing the data transmission latency, and ensuring that the data in the first data packet can be transmitted and processed in real time as far as possible.

In a possible implementation, the obtaining the first data packet based on the second data packet includes processing below:
obtaining the first data packet by processing the second data packet through the physical layer of the target node in at least one of ways below:
i. reading, if the second data packet includes target data, the target data from the second data packet, wherein the target data destined for the target node or common data of a transmission system where the target node is located;
ii. writing, if the to-be-transmitted data is obtained, at least a portion of the to-be-transmitted data into the second data packet; or
iii. determining, if the second data packet does not include the data destined for the target node and the target node does not obtain the to-be-transmitted data, the second data packet as the first data packet.

Data loaded in a data packet may be of any one of a plurality of data types, namely: Local Interconnect Network (LIN) bus data, Pulse Width Modulation (PWM) data, Inter-Integrated Circuit (I2C) bus data, Serial Peripheral Interface (SPI) bus data, Quad Serial Peripheral Interface (QSPI) bus data, General-purpose input/output (GPIO) data, Ethernet data, Controller Area Network (CAN) bus data, Media Independent Interface (MII) data and data of various extensions and derivatives of media independent interface, Universal Asynchronous Receiver/Transmitter (UART) data, Single Edge Nibble Transmission (SENT) bus data, Peripheral Sensor Interface 5 (PSI5) bus data, Inter-IC Sound (I2S) bus data, Time-Division Multiplexing (TDM) data, Analog Microphone (AMIC) data, Digital Microphone (DMIC) data, Analog-to-digital converter (ADC) data, etc.

Based on the above, the common data may be common data to be obtained by each node, for example, including but not limited to audio data, etc., which is not limited in the embodiments of the present disclosure.

In an embodiment of the present disclosure, when obtaining the first data packet based on the second data packet, the target node can obtain data from the second data packet, or can write to-be-inputted data into the second data packet, or can directly use the second data packet as the first data packet. Therefore, compared to data transmission by data decapsulation and re-encapsulation in the MCU, the target node reads from/writes into the second data packet, which can implement data transmission by the target node more simply and quickly, thereby improving the data transmission efficiency.

In a possible implementation, the physical layer in each embodiment of the present disclosure includes an Ethernet physical layer or a private physical layer carried by Low Voltage Differential Signaling (LVDS) transmission technology. It should be understood that the embodiments of the present disclosure do not impose any limitation on the physical layer in all respects of the present disclosure.

In a possible implementation, the first data packet is obtained by processing the second data packet via the target node via the real-time streaming manner. Therefore, the target node implements data transmission and processing via the real-time streaming manner. Compared with switch-based transmission or other software-based or wireless transmission of a data packet in related art, whereby all data in the packet needs to be completely received before transmission or processing, the target node can process data in the second data packet almost in real time, that is, immediately process and transmit a portion of the data in the second data packet upon obtainment, thereby further reducing the data transmission latency, and ensuring that the data in the second data packet can be transmitted and processed in real time as far as possible.

In a possible implementation, the second data packet includes at least one data field, and a data field marked as being in an idle state in the second data packet is an idle field. Based on the above:
the reading, if the second data packet includes the target data, the target data from the second data packet includes the operation below:
obtaining, if the second data packet includes a first data field for loading the target data, the target data loaded in the first data field, and determining the first data field where the target data is located as an idle field.

Optionally, if the target data is the common data, after the common data loaded in the first data field is obtained, the first data field where the common data is located may not be determined as an idle field, that is, the target node only reads data from the first data field without changing original data in the first data field.

The writing, if the to-be-transmitted data is obtained, at least the portion of the to-be-transmitted data into the second data packet includes the operation below:
loading, if obtaining the to-be-transmitted data, at least the portion of the to-be-transmitted data into the idle field or the second data field in the second data packet, wherein the second data field is a data field with data loaded therein having a lower priority than the to-be-transmitted data.

When data is read from the second data packet:
in a specific embodiment, after obtaining the target data loaded in the first data field in the second data packet, the target node can determine the first data field corresponding to the target data of the target node as an idle field.

When data is written into the second data packet:
in a specific embodiment, after obtaining to-be-transmitted data to be written into the second data packet, the target node can load the to-be-transmitted data into an idle field in the second data packet.

In another specific embodiment, after obtaining the to-be-transmitted data to be written into the second data packet, the target node can determine whether a data field with data loaded therein having a lower priority than the to-be-transmitted data is present in the second data packet, use, if a data field with data loaded therein having a lower priority than the to-be-transmitted data is present in the second data packet, the data loaded in the data field as the to-be-transmitted data, and load the to-be-transmitted data into the data field, and otherwise load the to-be-transmitted data into the idle field.

In an embodiment of the present disclosure, after obtaining the target data, the target node can determine the first data field where the target data whose destination node is the target node is located as an idle field, and after obtaining the to-be-transmitted data, the target node can load the to-be-transmitted data into the idle field or the data field with data loaded therein having a lower priority than the to-be-transmitted data. Therefore, a first data field corresponding to target data whose destination node is the target node is determined as an idle field, which is convenient for loading more data into the second data packet, thereby enabling the first data packet to be loaded with more valid data, and improving the data transmission efficiency.

In addition, when the to-be-transmitted data is loaded into the second data packet, data in the data field with data loaded therein having a lower priority than the to-be-transmitted data can be replaced with the to-be-transmitted data, thereby ensuring that high-priority data is priorly loaded into the first data packet as far as possible, reducing the transmission latency of data with high requirements for data timeliness during data transmission by the target node based on the first data packet.

Optionally, after obtaining the to-be-transmitted data to be written into the second data packet, if the target node determines that a data field with data loaded therein having a lower priority than the to-be-transmitted data is present in the second data packet, and data loaded in the data field has a lower priority than a target priority, the target node elevates the priority of the data loaded in the data field, for example, elevates the priority of the data loaded in the data field by one priority or to a secondary target priority, etc., wherein the target priority is, e.g., a highest priority or a second highest priority, which is not limited in the embodiments of the present disclosure, thereby reducing the possibility that low-priority data remains at the target node for too long, and improving the data transmission efficiency.

As an example, in an embodiment of the present disclosure, the data priority may be the highest priority, a timeout priority, a high priority, and a low priority in descending order. The above second highest priority is the timeout priority. The embodiments of the present disclosure do not impose any limitation on specific setting of the data priority.

In a possible implementation, the writing, if the to-be-transmitted data are obtained, at least the portion of the to-be-transmitted data into the idle field or the second data field in the second data packet includes processing below:
sequentially loading, if a plurality of the to-be-transmitted data are obtained, at least a portion of each of the to-be-transmitted data into the idle field or the second data field in descending order of priority of the plurality of the to-be-transmitted data.

In an embodiment of the present disclosure, for the to-be-transmitted data obtained by the target node, if there are a plurality of to-be-transmitted data, at least the portion of each of the to-be-transmitted data is sequentially written into the second data packet in descending order of corresponding priority. Therefore, by setting the data priority, the target node priorly writes high-priority to-be-transmitted data into the second data packet, so that the first data packet can be loaded priorly with a high-priority data sub-block, thereby improving the transmission efficiency of data with high requirements for data timeliness during data transmission by the target node.

In a possible implementation, the method for data transmission further includes processing below:
processing, if the second data packet includes a plurality of the first data fields and after the target data loaded in the plurality of the first data fields are obtained, the target data loaded in the first data fields in descending order of priority of the target data loaded in the plurality of the first data fields.

In an embodiment of the present disclosure, for the target data in the second data packet obtained by the target node, the target node may sequentially process the target data in descending order of corresponding priority. Therefore, the target node can priorly process high-priority data obtained from the second data packet, thereby improving the transmission efficiency of data with high requirements for data timeliness during data transmission by the target node.

In a possible implementation, the method for data transmission further includes:
elevating, if a retention duration of the to-be-transmitted data at the target node is longer than a preset duration threshold and a priority of the to-be-transmitted data being lower than a second highest priority, the priority of the to-be-transmitted data. The duration threshold may be set based on actual requirements, and is not limited in the embodiments of the present disclosure.

Based on the fact that priorities of data sub-blocks may be a highest priority, a timeout priority, a high priority, and a low priority in descending order of priority. The above second highest priority is the timeout priority.

In a specific embodiment, if the to-be-transmitted data has a lower priority than the timeout priority, when the retention duration of the to-be-transmitted data at the target node is longer than the preset duration threshold, the priority of the to-be-transmitted data can be elevated by one priority, and the retention duration of the to-be-transmitted data at the target node can be recalculated. After the retention duration of the to-be-transmitted data at the target node becomes longer than the preset duration threshold again, the priority of the to-be-transmitted data is elevated by one additional priority..., until the to-be-transmitted data is written into the second data packet, or the priority of the to-be-transmitted data reaches the timeout priority.

In another specific embodiment, if the to-be-transmitted data has a lower priority than the timeout priority, when the retention duration of the to-be-transmitted data at the target node is longer than the preset duration threshold, the priority of the to-be-transmitted data can be elevated to the timeout priority.

In an embodiment of the present disclosure, for to-be-transmitted data with a lower priority than the second highest priority, if a retention duration of a sub-block into which data is to be written at the target node is longer than the preset duration threshold, the priority of the to-be-transmitted data is elevated. This can reduce the possibility that the to-be-transmitted data is not written into the second data packet for too long due to reasons such as a few idle fields in the second data packet or the low priority of the to-be-transmitted data, and can further reduce the possibility that the retention duration of the to-be-transmitted data at the target node is too long, thereby improving the data transmission efficiency of the target node.

In a possible implementation, the sequentially loading at least the portion of each of the to-be-transmitted data into the idle field or the second data field includes processing below:
if a data size of the to-be-transmitted data is greater than a capacity of the data field, splitting, for each of the to-be-transmitted data, the to-be-transmitted data into at least two sub-data, and loading the at least two sub-data into the idle field or the second data field respectively; andif the data size of the to-be-transmitted data is less than or equal to the capacity of the data field, loading the to-be-transmitted data into the idle field or the second data field.

In an embodiment of the present disclosure, whether to split the to-be-transmitted data can be determined based on a relationship between capacity of a data field and size of the to-be-transmitted data. Therefore, when the to-be-transmitted data has a large data size, the to-be-transmitted data can be split to facilitate loading into a plurality of data fields of the second data packet, thereby improving the adaptability of data transmission.

In a possible implementation, the to-be-transmitted data is data obtained by the physical layer of the target node from an external device connected to the target node or a local module in the target node.

In an embodiment of the present disclosure, the to-be-transmitted data obtained by the target node is obtained directly through the physical layer, without the need for an encapsulation or decapsulation operation, thereby reducing the transmission latency in data transmission by the target node.

In a possible implementation, the above processing the target data loaded in each of the first data fields includes processing below:
reading from/writing into the external device connected to the target node or the local module in the target node based on the target data loaded in the first data fields.

If the target node is connected to the external device, the external device of the target node may be at least one of, e.g., a Local Interconnect Network (LIN) bus external device, a Pulse Width Modulation (PWM) drive device, an Inter-Integrated Circuit (I2C) bus external device, a Serial Peripheral Interface (SPI) bus external device, a Quad Serial Peripheral Interface (QSPI) bus external device, a General-purpose input/output (GPIO) external device, an Ethernet external device, a Controller Area Network (CAN) bus external device, an external device with a Media Independent Interface (MII) and external devices with various extensions and derivatives of the MII, a Universal Asynchronous Receiver/Transmitter (UATI) external device, a Single Edge Nibble Transmission (SENT) bus external device, an external device supporting Peripheral Sensor Interface 5 (PSIS) protocol, an Inter-IC Sound (I2S) external device, a Time-Division Multiplexing (TDM) external device, an Analog Microphone (AMIC) external device, a Digital Microphone (DMIC) external device, or an Analog-to-digital converter (ADC) external device.

The local module in the target node may be a register arranged inside the target node, which is not limited in the embodiments of the present disclosure.

In an embodiment of the present disclosure, the target node can read from/write into the external device connected to the target node and/or the local module in the target node based on the target data obtained from the second data packet. Therefore, the target node can read from/write into the external device connected to the target node and/or the local module in the target node directly based on the obtained target data without the need for an encapsulation or decapsulation operation, thereby reducing the transmission latency in data transmission by the target node.

If the first data packet being generated by the target node and the first data packet is obtained by processing the received data packet via the target node respectively, the target node and the downstream node have at least two application scenarios below:
in a possible implementation, if the first data packet is generated by the target node, the target node and the downstream node can be applied to a transmission system. The transmission system includes a master node and a plurality of child nodes, and the master node and the plurality of child nodes are sequentially connected to form a link. Based on the above:
if the link is a ring topology, the target node is the master node, and the downstream node is any one child node adjacent to the master node;
if the link is a linear topology, and a first child node and a second child node are located at both ends of the link respectively, the target node is the master node, and the downstream node is any one child node adjacent to the master node, or the target node is the first child node and the downstream node is a child node adjacent to the first child node, or the target node is the second child node and the downstream node is a child node adjacent to the second child node; and
if the link is a linear topology, and the master node and a third child node are located at both ends of the link respectively, the target node is the master node and the downstream node is the child node adjacent to the master node, or the target node is the third child node and the downstream node is a child node adjacent to the third child node.

In another possible implementation, if the first data packet is obtained by processing the received second data packet via the target node, the target node and the downstream node are applied to a transmission system. The transmission system includes a master node and a plurality of child nodes, and the master node and the plurality of child nodes are sequentially connected to form a link. Based on the above:
the link is a ring topology, or the link is a linear topology and a first child node and a second child node are located at both ends of the link respectively, or the link is a linear topology and the master node and a third child node are located at both ends of the link respectively; and
the target node is any one of the child nodes, and the upstream node and the downstream node are two adjacent nodes to the target node in the link respectively.

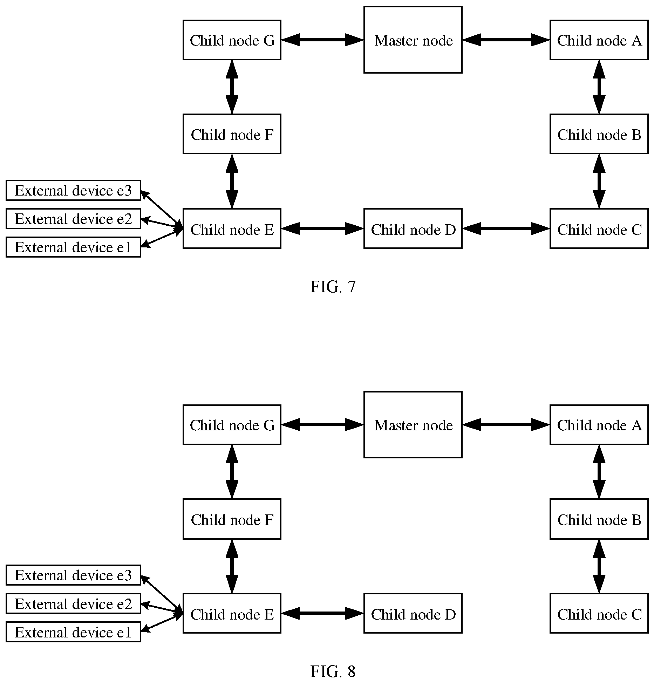

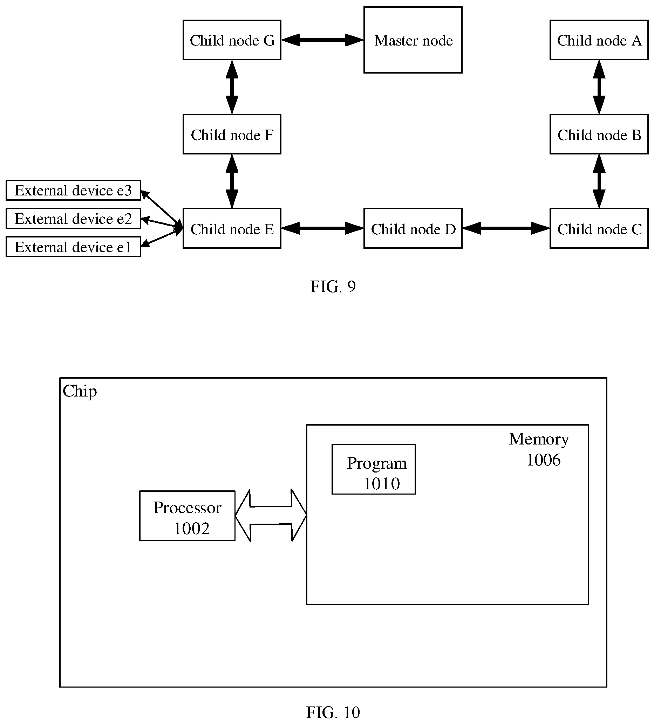

For example, when the link is a ring topology, the transmission system may have a structure as shown in FIG. 7; when the link is a linear topology, and the first child node and the second child node are located at both ends of the link respectively, the transmission system may have a structure as shown in FIG. 8, the first node in FIG. 8 may be a child node D, and the second child node may be a child node C; and when the link is a linear topology, and the master node and the third child node are located at both ends of the link respectively, the transmission system may have a structure as shown in FIG. 9, and the third child node in FIG. 9 is a child node A.

In FIGS. 7-9, child nodes A, B, C, D, E, F and G are all child nodes, and at least some of the child nodes are connected to at least one external device, specifically for example, the child node E is connected to external devices e1, e2, and e3.

It should be noted that the embodiments of the present disclosure do not impose any limitation on the number of child nodes and the number of external devices connected to the child nodes, and in order to make the schematic diagram as concise and clear as possible, the schematic diagram of the transmission system in an embodiment of the present disclosure only shows external devices, namely the external devices e1, e2, and e3, connected to the child node E, and external devices of the child nodes A, B, C, D, F and G are not shown in FIGS. 7-9.

In an embodiment of the present disclosure, compared to use of a plurality of subsystems corresponding to different bus types in order to transmit a plurality of types of data, use of the above transmission system equipped with the target node, the downstream node and the upstream node can implement mixed transmission of a plurality of types of data through the link, so that the transmission system features simple wiring and light weight of the wire harness, which facilitates the assembly and maintenance of the transmission system. In addition, the transmission system transmits data among different nodes through the physical layer, without the need for a MCU and a switch, thereby reducing costs.

Optionally, the link of the linear topology may be obtained by disconnecting any two adjacent nodes of the link of the ring topology. For example, the link in FIG. 8 may be obtained by disconnecting the child node C and from the child node D when the link in FIG. 7 fails at the child node C, and the link in FIG. 9 may be obtained by disconnecting the master node from the child node A when the link in FIG. 7 fails at the child node A.

Optionally, the master node in the transmission system can periodically sends and receives data packets in the link, to minimize conflicts in the data transmitted in the link, and minimize the data transmission latency in the link, thereby satisfying stringent latency requirements for audio data.

In a possible implementation, the first data packet includes at least one data field, and the data type of data loaded in each data field is any one of the above plurality of data types. Therefore, different data sub-blocks in the first data packet may have same or different data types, and then the target node can implement mixed transmission of data of different data types through the first data packet. Compared to data transmission using nodes corresponding to different data types in order to transmit data of a plurality of data types, arrangement of the first data packet can enable the target node to transmit data of more data types, and the transmission system composed of the target node can be simpler and more inexpensive.

In a possible implementation, the data field includes a data sub-block and a sub-block header, the data sub-block is used to load main data, the sub-block header is used to load attribute information of the main data, and the attribute information of the main data includes data type information of the main data and a data length of the main data.

In a possible implementation, the attribute information of the main data further includes at least one of idle information of a data field where the main data is located, a data transmission direction of the target node, source node information of the main data, destination node information of the main data, priority information of the main data, and sequence number information of the main data.

As an example, the attribute information of the main data loaded in the first data packet is specifically illustrated below:
the above data type information may be an identifier of an interface corresponding to the main data in a source node corresponding to the main data, the identifier may have a data size of 5 bits, each interface in a source node corresponding to each main data has a corresponding data type, a given interface corresponds to a single data type, and any two different interfaces may correspond to same or different data types;
the above data length may have a data size of 8 bits;
idle information in a data field where the above main data is located may have a data size of 1 bit, and the idle information may be used to mark whether the data field is idle;
the data transmission direction of the above target node may be a direction of transmitting the first data packet by the target node in a transmission system to which the target node is applied, and when the target node is the above master node, the attribute information of the main data in the first data packet generated by it usually includes the data transmission direction, and otherwise, the attribute information of the data sub-block in the first data packet usually does not include the data transmission direction;
the above source node information may be a source node identifier, if the source node is the above child node or the above master node, the source node identifier may have a data size of 5 bits, and if the source node is the above child node or a branch node connected to the above master node, the source node identifier may have a data size of 3 bits;
the above target node information may be a target node identifier, if the target node is the above child node or the above master node, the target node identifier may have a data size of 5 bits, and if the target node is the above child node or a branch node connected to the above master node, the target node identifier may have a data size of 3 bits;
the above priority information is used to indicate a priority of the corresponding main data, and may have a data size of 2 bits; and
the above sequence number information may be a sequence number identifier with a data size of 2 bits, in particular, since a priority corresponding to the main data is the highest priority, the first data packet may further include a candidate field of the data field where the main data is located, so that when a destination node corresponding to the main data processes the main data, if an error occurs in the main data, the destination node processes the main data in the candidate field, thereby reducing a bit error rate of data with the highest priority, and improving the data transmission reliability of the data with the highest priority, wherein main data loaded in the candidate field is exactly identical to main data loaded in the data field, but sequence number information in their attribute information is different, thereby distinguishing between the two based on their sequence number information; and the number of candidate fields for any one data field with a candidate field may be, e.g., 1, 2, or 3. The embodiments of the present disclosure do not impose any limitation on the number of candidate fields for a data field with a candidate field. The number of data field intervals between two adjacent candidate fields to a given data field may be set to, e.g., 0, 1, or 2, which is not limited in the embodiments of the present disclosure.

It should be noted that the above data type information and data length are usually essential information in the attribute information of the corresponding main data, and other information in the attribute information of the above main data is usually related to the application scenario and/or the transmission system form of the first data packet, which is not limited in the embodiments of the present disclosure.

The attribute information of the main data loaded in the second data packet is similar to the attribute information of the main data loaded in the first data packet, and will not be repeated in the embodiments of the present disclosure.

Based on the above, when the to-be-transmitted data is written into a data field in the second data packet, the to-be-transmitted data is used as the main data, and the attribute information of the main data is generated, to load the to-be-transmitted data as the main data into the data sub-block of the data field, and the attribute information of the main data is loaded into the sub-block header of the data field; and when the target data is read from the data field in the second data packet, data loaded in a data field where the main data of the target data is located in the second data packet is obtained.

In an embodiment of the present disclosure, the sub-block header is used to load the attribute information of the main data. The attribute information of the main data is relatively comprehensive, so that the main data can be accurately obtained from the first data packet or the second data packet, and the target node can accurately process the main data, thereby reducing the bit error rate of data transmission. In addition, the first data packet may further load data sub-blocks of different data types based on loaded attribute information.

In a possible implementation, the data sub-block is further used to load a check bit for checking the main data loaded in the data sub-block.

For example, main data in any one data sub-block includes a plurality of first values, a check bit in the data sub-block is a second value, and the check bit is used to determine whether a sum of corresponding main data is the check bit, so that a destination node of the main data can determine the correctness of the main data. In the destination node of the main data, if a sum of the plurality of first values is determined to be the second value, the main data is correct, and otherwise, the main data is incorrect.

In an embodiment of the present disclosure, the data sub-block is further used to load the check bit for checking the main data, thereby reducing the possibility that the target node processes the incorrect main data, and improving the reliability of data transmission by the target node.

Further, based on an actual application scenario, the master node can specify a specific format of data loaded in the data field, for example, data of local access data, which may include, e.g., a read/write instruction, an address, and to-be-transmitted data; for another example, data of SPI data, which may include, e.g., an address, a data length, and data for interaction with an external device.

In a possible implementation, as shown in FIG. 3, the first data packet and the second data packet each further includes a common header loaded with a preamble for physical layer protocol identification corresponding to the first data packet.

In a possible implementation, the common header may be further loaded with at least one of system information of a transmission system where the target node is located and data type information of at least a portion of main data in a data packet where the common header is located.

As an example, the common header in the first data packet is specifically illustrated below:
the above preamble may be a preamble for physical coding sublayer (PCS) protocol identification of a PHY; and
the system information of the transmission system where the target node is located may include a shape identifier and a data transmission direction identifier of the above link. The shape identifier and the data transmission direction identifier may each have a data size of 1 bit. In a specific example, if the above link is a ring topology, the shape identifier is 0; if the above link is a linear topology, the shape identifier is 1; if the above link is a ring topology and the first data packet is transmitted clockwise along the link, the data transmission direction identifier is 0; if the above link is a ring topology and the first data packet is transmitted counterclockwise along the link, the data transmission direction identifier is 1; if the above link is a linear topology, the first child node and the second child node are located at two ends of the link respectively, and the first data packet is transmitted between any two nodes on a first sub-link, the data transmission direction identifier is 1; and if the above link is a linear topology, the first child node and the second child node are located at two ends of the link respectively, and the first data packet is transmitted between any two nodes on a second sub-link, the data transmission direction identifier is 0. The first sub-link is composed of a master node, a child node between the master node and a first child node, and the first child node. The second sub-link is composed of a master node, a child node between the master node and a second child node, and the second child node.

The data type information of at least the portion of the main data in the data packet where the common header is located may include a first identifier, a second identifier, a third identifier, a fourth identifier, and a fifth identifier, wherein the first identifier is used to identify whether the first data packet is loaded with main data with a data type of audio data, and may have a data size of 1 bit, the second identifier is used to identify a transmission direction of the main data with the data type of audio data loaded in the first data packet in the above link, and may have a data size of 1 bit, the third identifier is used to identify a data length of the main data with the data type of audio data in the first data packet, and may have a data size of 5 bits, the fourth identifier is used to identify whether an Ethernet packet with a same transmission path is present on a transmission path corresponding to the first data packet in the above link, so as to ensure that only a single Ethernet packet can be transmitted on a same transmission path as far as possible, and the fifth identifier is used to indicate whether to perform data expansion on main data with a data type of GPIO data in the first data packet, and is used to identify processing indication information of processing the main data by a destination node of the main data with the data type of GPIO data in the first data packet.

It should be noted that the above preamble is usually essential information in the corresponding common header, and other information loaded in the above common header is usually related to the application scenario and/or the transmission system form of the first data packet, which is not limited in the embodiments of the present disclosure.

The common header in the second data packet is similar to the common header in the first data packet, and will not be repeated in the embodiments of the present disclosure.

In an embodiment of the present disclosure, the common header is loaded with comprehensive information, so that the main data can be accurately obtained from the first data packet or the second data packet, and the target node can accurately process the main data, thereby reducing the bit error rate of data transmission.

### Chip

FIG. 10 is a schematic block diagram of a chip provided in an embodiment of the present disclosure. Specific embodiments of the present disclosure do not impose any limitation on specific implementations of the chip. As shown in FIG. 10, the chip may include: a processor 1002 and a memory 1006, wherein:
the processor 1002 and the memory 1006 communicate with each other.

The processor 1002 is configured to execute a program 1010, and specifically can implement relevant steps of the method for data transmission in any one of the above embodiments.

Specifically, the program 1010 may include a program code. The program code includes a computer operation instruction.

The processor 1002 may be a CPU, or an Application Specific Integrated Circuit (ASIC), or one or more integrated circuits configured to implement embodiments of the present disclosure. One or more processors included in a smart device may be processors of the same type, e.g., one or more CPUs; or may be processors of different types, e.g., one or more CPUs and one or more ASICs.

RISC-V is an open-source instruction set architecture based on a reduced instruction set (RISC) principle, can be applied to various aspects such as a single chip microcomputer and a FPGA chip, and can be specifically applied to the fields, such as security of Internet of Things, industrial control, a mobile phone, and a personal computer. Moreover, it is designed based on actual situations such as a small size, a fast speed, and low power consumption, so that it is particularly adapted to a modern computing device, such as a warehouse-scale cloud computer, a high-end mobile phone, and a tiny embedded system. With the emergence of the artificial intelligence Internet of Things (AIoT), the RISC-V instruction set architecture has also attracted more and more attention and support, and is expected to become the next generation of a widely used CPU architecture.

The computer operation instruction in an embodiment of the present disclosure may be a computer operation instruction based on the RISC-V instruction set architecture. Accordingly, the processor 1002 may be designed based on the RISC-V instruction set. Specifically, the chip provided in an embodiment of the present disclosure may be a chip designed using the RISC-V instruction set. The chip can execute an executable code based on a configured instruction, thereby implementing the method for data transmission in the above embodiments.

The memory 1006 is configured to store the program 1010. The memory 1006 may include a high-speed RAM memory, and may further include a non-volatile memory, e.g., at least one disk memory.

The program 1010 may specifically be used for enabling the processor 1002 to execute the method for data transmission in any one of the above embodiments.

Corresponding description of the corresponding steps and units of the method for data transmission in any one of the above embodiments may be referred to for specific implementations of the steps in the program 1010, which will not be repeated here. Those skilled in the art can clearly understand that, for convenience and simplicity of description, the description of corresponding processes in the above method embodiments may be referred to for specific operating processes of the above-described devices and modules, which will not be repeated here.

In an embodiment of the present disclosure, the chip can obtain the first data packet transmitted via the physical layer, and transmit the first data packet to the physical layer of the downstream node through the physical layer of the target node. Therefore, the first data packet is transmitted via the physical layer. Compared with data packet encapsulation across multiple protocol layers through a MCU, the first data packet does not include a plurality of protocol headers, and to-be-transmitted data accounts for a large proportion in the first data packet, thereby improving the bandwidth utilization of the target node for data transmission; and the first data packet is directly transmitted to the downstream node through the physical layer of the target node, without the need for transmission through a switch, without the need for complex encapsulation through a MCU of the target node, and without the need for complex parsing at the downstream node, thereby reducing the transmission latency in data transmission by the target node, sending data from the target node to the downstream node in real time, and improving the transmission efficiency.

### Computer storage medium

The present disclosure further provides a computer-readable storage medium storing an instruction for enabling a machine to execute the method for data transmission as described herein. Specifically, a system or apparatus equipped with a storage medium may be provided, wherein the storage medium stores a software program code for implementing the functions of any one embodiment among the above embodiments, and makes a computer (or CPU or MPU) of the system or the apparatus read and execute the program code stored in the storage medium.

In this case, the program code read from the storage medium itself can implement the functions of any one embodiment among the above embodiments, and thus the program code and the storage medium storing the program code constitute a part of the present disclosure.

Embodiments of storage mediums for providing the program code include a floppy disk, a hard disk, a magneto-optical disk, an optical disk (e.g., CD-ROM, CD-R, CD-RW, DVD-ROM, DVD-RAM, DVD-RW, or DVD+RW), a magnetic tape, a non-volatile memory card, and a ROM. Optionally, the program code may be downloaded from a server computer through a communication network.

It should be noted that user-related information (including but not limited to user device information, user personal information, etc.) and data (including but not limited to sample data for model training, data for analysis, stored data, displayed data, etc.) involved in the embodiments of the present disclosure are all information and data that are authorized by a user or fully authorized by all parties. Relevant data needs to be collected, used, and processed following relevant laws, regulations, and standards of relevant countries and regions, and be provided with a corresponding operation portal for users to choose or refuse authorization.

As will be appreciated by those of ordinary skills in the art, the various example units and method steps described in combination with the embodiments disclosed herein can be implemented by electronic hardware, or a combination of computer software and electronic hardware. Whether these functions are executed by hardware or software depends on particular applications and design constraints of the technical solutions. Those skilled in the art may implement the described functions for particular applications using different methods, but such implementation should not be considered as falling beyond the scope of the embodiments of the present disclosure.

The above embodiments are only used to illustrate the embodiments of the present disclosure, and are not intended to limit the embodiments of the present disclosure. Those of ordinary skills in the relevant technical field may further make various alterations and modifications without departing from the spirit and scope of the embodiments of the present disclosure. Therefore, all equivalent technical solutions are also encompassed within the scope of the embodiments of the present disclosure, and the scope of patent protection of the embodiments of the present disclosure should be defined by the claims.

## Claims

1. A method for data transmission, applied to a target node, comprising:
obtaining a first data packet transmitted via a physical layer; and
sending, by a physical layer of the target node, the first data packet to a physical layer of the downstream node based on a physical transmission medium used for connecting a first interface of the target node and a second interface of a downstream node.

2. The method according to claim 1, wherein the obtaining the first data packet transmitted via the physical layer comprises:
obtaining to-be-transmitted data, and encapsulating the to-be-transmitted data, to obtain the first data packet.

3. The method according to claim 1, wherein the obtaining the first data packet transmitted via the physical layer comprises:
receiving, by the physical layer of the target node, a second data packet transmitted via the physical layer from a physical layer of the upstream node based on a physical transmission medium used for connecting a third interface of the target node and a fourth interface of the upstream node; and
obtaining the first data packet based on the second data packet.

4. The method according to any one of claims 1 to 3, wherein the first data packet is sent by the physical layer of the target node to the physical layer of the downstream node via a real-time streaming manner.

5. The method according to claim 4, wherein the first data packet comprises a plurality of data fields partitioned into a plurality of time slices in a time domain, so that a preceding data field among the plurality of data fields is processed and transmitted by the target node prior to subsequent data fields.

6. The method according to claim 3, wherein the obtaining the first data packet based on the second data packet comprises:
obtaining the first data packet by processing the second data packet in at least one of the operations below:
i. reading, when the second data packet comprising target data, the target data from the second data packet, wherein the target data includes data destined for the target node or common data of a transmission system where the target node is located;
ii. writing, when the to-be-transmitted data is obtained, at least a portion of the to-be-transmitted data into the second data packet; or
iii. determining, when the second data packet does not include the data destined for the target node and the target node does not obtain the to-be-transmitted data, the second data packet as the first data packet.

7. The method according to claim 6, wherein the first data packet is obtained by processing the second data packet via the target node via a real-time streaming manner.

8. The method according to claim 6, wherein the second data packet comprises at least one data field, and a data field marked as being in an idle state in the second data packet is an idle field;
the reading, when the second data packet target data, the target data from the second data packet comprises:
obtaining, when the second data packet includes a first data field for loading the target data, the target data loaded in the first data field, and determining the first data field where the target data is located as an idle field; and
the writing, when the to-be-transmitted data is obtained, at least a portion of the to-be-transmitted data into the second data packet comprises:
loading, when the to-be-transmitted data is obtained, at least the portion of the to-be-transmitted data into the idle field or the second data field in the second data packet, wherein the second data field is a data field with data loaded therein having a lower priority than the to-be-transmitted data.

9. The method according to claim 8, wherein the loading, when the to-be-transmitted data is obtained, at least the portion of the to-be-transmitted data into the idle field or the second data field in the second data packet comprises:
sequentially loading, when a plurality of the to-be-transmitted data are obtained, at least a portion of each of the to-be-transmitted data into the idle field or the second data field in descending order of priority of the plurality of the to-be-transmitted data.

10. The method according to claim 8, wherein the method further comprises:
processing, when the second data packet includes a plurality of the first data fields and after obtaining the target data loaded in the plurality of the first data fields, the target data loaded in the first data fields in descending order of priority of the target data loaded in the plurality of the first data fields.

11. The method according to claim 9 or 10, wherein the method further comprises:
elevating, when a retention duration of the to-be-transmitted data at the target node being longer than a preset duration threshold and a priority of the to-be-transmitted data being lower than a second highest priority, the priority of the to-be-transmitted data.

12. The method according to claim 9, wherein the sequentially loading at least the portion of each of the to-be-transmitted data into the idle field or the second data field comprises:
splitting, for each of the to-be-transmitted data, when a data size of the to-be-transmitted data is greater than a capacity of the data field, the to-be-transmitted data into at least two sub-data, and loading the at least two sub-data into the idle field or the second data field respectively; and
loading, when the data size of the to-be-transmitted data is less than or equal to the capacity of the data field, the to-be-transmitted data into the idle field or the second data field.

13. The method according to claim 2 or 6, wherein the to-be-transmitted data is data obtained by the physical layer of the target node from an external device connected with the target node or a local module in the target node.

14. The method according to claim 10, wherein the processing the target data loaded in the first data fields comprises:
reading from or writing into the external device connected to the target node or the local module in the target node based on the target data loaded in the first data fields.

15. The method according to claim 1, wherein the first data packet comprises at least one data field, the data field comprises a data sub-block and a sub-block header, the data sub-block is used to load main data, the sub-block header is used to load attribute information of the main data, and the attribute information of the main data comprises data type information of the main data and a data length of the main data.

16. The method according to claim 15, wherein the attribute information of the main data further comprises at least one of idle information of a data field where the main data is located, a data transmission direction of the target node, source node information of the main data, destination node information of the main data, priority information of the main data, and sequence number information of the main data.

17. The method according to claim 1, wherein the first data packet comprises a common header, and the common header is loaded with a preamble for physical layer protocol identification corresponding to the first data packet.

18. The method according to claim 3, wherein the target node, the downstream node, and the upstream node are applied to a transmission system, the transmission system comprises a master node and a plurality of child nodes, and the master node and the plurality of child nodes are sequentially connected to form a link;
the link is a ring topology, or the link is a linear topology and a first child node and a second child node are located at both ends of the link respectively, or the link is a linear topology and the master node and a third child node are located at both ends of the link respectively; and
the target node is any one of the child nodes, and the upstream node and the downstream node are two adjacent nodes to the target node in the link respectively.

19. A chip, comprising: a processor and a memory, wherein the processor and the memory communicate with each other; and
the memory is configured to store at least one executable instruction, wherein the executable instruction enables the processor to implement corresponding operations of the method for data transmission according to any one of claims 1-18.

20. A computer storage medium, storing a computer program thereon, wherein the program, when executed by a processor, implements the method for data transmission according to any one of claims 1-18.
